Europäisches Patentamt

European Patent Office

Office européen des brevets

(19)

(11) Veröffentlichungsnummer: **0 058 211**
**B1**

(12)
# EUROPÄISCHE PATENTSCHRIFT

(45) Veröffentlichungstag der Patentschrift:
17.04.85

(51) Int. Cl.⁴: **F 16 B  43/00**

(21) Anmeldenummer: **81101011.5**

(22) Anmeldetag: **13.02.81**

(54) Selbstdichtende Unterlegscheibe.

(43) Veröffentlichungstag der Anmeldung:
25.08.82 Patentblatt 82/34

(45) Bekanntmachung des Hinweises auf die Patenterteilung:
17.04.85 Patentblatt 85/16

(84) Benannte Vertragsstaaten:
AT BE CH DE FR GB IT LI LU NL SE

(56) Entgegenhaltungen:
DE - A - 2 437 989
DE - B - 2 629 548
DE - B - 2 756 351
DE - C - 40 894
DE - U - 1 846 064
DE - U - 6 981 955
FR - A - 1 275 199
FR - A - 2 348 427

(73) Patentinhaber: **Firma Carl Freudenberg, Höhnerweg 2,
D-6940 Weinheim/Bergstrasse (DE)**

(72) Erfinder: **Peschges, Klaus-Jürgen, Dr., Kirchstrasse 12,
D-6941 Laudenbach (DE)**

(74) Vertreter: **Weissenfeld-Richters, Helga, Dr.,
Höhnerweg 2, D-6940 Weinheim/Bergstrasse (DE)**

## Beschreibung

Die Erfindung betrifft eine selbstdichtende Unterlegscheibe, bei welcher sich ein Dichtring aus einem nachgiebigen, volumenkonstanten Werkstoff zwischen zwei konzentrisch angeordneten, einen umlaufenden Spalt bildenden, unnachgiebigen Distanzringen befindet, die somit einen Innenring und einen Außenring umfassen, und wobei der Dichtring eine Bauhöhe hat, die im entspannten Zustand vor dem Einbau größer ist und im gespannten Zustand nach dem Einbau identisch ist mit der Dicke der Distanzringe.

Eine solche Unterlegscheibe ist bekannt und wird beispielsweise in der DE-A-2 437 989 beschrieben. Die Distanzringe sind dabei auf der dem Dichtring zugewandten Seite relativ kompliziert gestaltet, um Freiräume zu schaffen, in die das Material des Dichtringes bei einer axialen Verpressung ausweichen kann. Die Herstellung der Distanzringe ist dementsprechend teuer. Der aus elastomerem Werkstoff bestehende Dichtring überragt die Distanzringe des weiteren vor dem Einbau in axialer Richtung beiderseits, was unkontrollierbare Beschädigungen und als Folge hiervon ein schlechtes Abdichtungsergebnis verursachen kann. Probleme treten diesbezüglich insbesondere dann auf, wenn die abzudichtenden Flächen beim Zusammenpressen nicht nur senkrecht sondern auch quer zu dieser Richtung bewegt werden, was allerdings bei Schrauben im allgemeinen die Regel ist. Es müssen dann besondere Vorkehrungen getroffen werden, um eine reibungsbedingte Beschädigung oder Zerstörung des Dichtringes zu verhindern. Diese Vorkehrungen, beispielsweise die Feinbearbeitung der Planflächen oder die Anbringung einer Zentrierbohrung zur Abstützung des Außenumfanges, erfordern zusätzliche Aufwendungen.

Die Anpreßkräfte des Dichtringes einer Unterlegscheibe der vorgenannten Art gegen die Planflächen der abgedichteten Maschinenteile resultieren im übrigen aus der durch die Deformierung erzeugten, elastischen Vorspannkraft und den sich damit überlagernden Reaktionskräften des abgedichteten Mediums. Sie sind insofern bei der Abdichtung von wechselnden Drücken nicht konstant und können durch Ermüdungserscheinungen des elastomeren Werkstoffes des Dichtringes beeinträchtigt werden.

Der Erfindung liegt die Aufgabe zugrunde, eine selbstdichtende Unterlegscheibe der eingangs genannten Art derart weiterzuentwickeln, daß ohne wesentliche Änderung der Abmessungen und ohne besondere Bearbeitung der abgedichteten Flächen eine dauerhaft gute Abdichtung von gegebenenfalls die Richtung wechselnden Drücken gewährleistet ist sowie eine gewisse Wiederverwendbarkeit.

Diese Aufgabe wird erfindungsgemäß mit den kennzeichnenden Merkmalen des Patentanspruches gelöst. Auf vorteilhafte Ausgestaltung wird in den Unteransprüchen Bezug genommen.

Die erfindungsgemäß vorgeschlagene Unterlegscheibe ist dadurch gekennzeichnet, daß die Distanzringe unter Überbrückung der Bauhöhe des ungespannten Dichtringes axial gegeneinander versetzt sind, wobei der Dichtring den Spalt ausfüllt und wobei wenigstens eine kegelige umlaufende Spannfläche des Innen- und/oder des Außenringes den Spalt verengt und so geneigt ist, daß sich bei einer gegenseitigen Verminderung des axialen Abstandes des Außen- und des Innenringes eine theoretische Verminderung des Volumens des Dichtringes ergibt.

Der Dichtring wird in radialer und in axialer Richtung beiderseits durch die Begrenzungsflächen des aus dem Innen- und dem Außenring gebildeten Distanzringes begrenzt. Dieser besteht aus einem harten Werkstoff, beispielsweise aus Metall, und er ist dementsprechend robust und unempfindlich gegenüber mechanischen Beschädigungen. Die Erstreckung des Profils in radialer Richtung ist nahezu konstant. Der Innenring und der Außenring können lediglich eine elastische Verminderung bzw. Ausweitung des Durchmessers infolge der Inkompressibilität des Werkstoffes des Dichtringes erfahren. In axialer Richtung ergibt sich beim Verpressen der abgedichteten Flächen eine Verminderung der Gesamthöhe bis zum Erreichen der Dicke des Distanzringes, d. h. bis zu einem Zeitpunkt, zu dem der Innen- und der Außenring in gleicher Ebene angelangt sind und gemeinsam der Kraftübertragung auf das angeschlossene Maschinenteil dienen.

Während dieses Vorganges ergibt sich durch die fortlaufende, achsparallele Verschiebung der keilartig wirkenden, kegligen Spannfläche(n) eine Verminderung des Volumens des Spaltes und dadurch eine Anpressung der axialen Begrenzungsflächen des Dichtringes gegen die beiderseits abzudichtenden Flächen. Der erzielte Abdichtungseffekt kann insofern noch am ehesten mit einer hydraulischen Anpressung verglichen werden. Er ist unabhängig von gegebenenfalls vorhandenen elastischen Eigenschaften des Dichtringes und damit unabhängig von werkstoffbedingten Ermüdungserscheinungen nach längerer belastung. Die sich mit zunehmender Elastizität verbessernde Rückformkraft nach vorausgegangener Verwendung gewährleistet aber eine mehrfache Wiederverwendbarkeit.

Diese läßt sich erst dann nicht mehr gewährleisten, wenn die an den abzudichtenden Maschinenelementen zur Anlage kommenden Stirnflächen des Dichtringes ihre Anschmiegsamkeit verloren haben, beispielsweise durch eingepreßten Schmutz oder durch die Einwirkung des abgedichteten Mediums. Beides ist maßgeblich abhängig vom speziellen Anwendungsfall. Unter den Bedingungen des allgemeinen Maschinenbaues ist eine mindestens zweifache Wiederverwendbarkeit gewährleistet.

Als thermoplastische Werkstoffe für die Herstellung des Dichtringes hat sich neben Polypropylen und Polyamid insbesondere PTFE bewährt.

Von elastomeren Werkstoffen eignen sich insbesondere solche auf der Basis Acrylnitril-Butadien (NBR) und Fluor-Kautschuk (FKM).

Die Shore-Härte soll den Bereich von Shore A 50 bis 90 möglichst nicht überschreiten. Sofern geschäumte Werkstoffe zur Anwendung kommen, soll die Porenstruktur geschlossenzellig sein, um einen inneren Druckaufbau und damit die benötigte Inkompressibilität zu gewährleisten. Eine große thermische Belastbarkeit kann erzielt werden, wenn der Dichtring aus einem weichen Metall besteht, bevorzugt aus Lötzinn oder Kupfer.

Eine besonders einfache Handhabung bei der Montage und bei der Demontage des Dichtringes ergibt sich, wenn der Innenring, der Dichtring und der Außenring einstückig verbunden sind. Die Verbindung braucht sich nicht durch eine besonders große Festigkeit auszuzeichnen, sie muß aber dauerbeständig sein gegenüber einer unerwünschten Auflösung unter der Einwirkung des abgedichteten Mediums und/oder höherer Temperaturen. Eine Herstellung parallel zur Erzeugung des Dichtringes durch unmittelbares Einspritzen in den Spalt zwischen dem Innen- und dem Außenring während der anschließenden Verfestigung hat sich unter diesem Gesichtspunkt besonders bewährt, wobei naturgemäß die besten Ergebnisse durch unmittelbares Anvulkanisieren erzielt werden.

Die in bezug auf die Abdichtung erwünschte Volumenverminderung des Spaltes beim axialen Zusammenpressen des Außen- und des Innenringes läßt sich durch eine einzige, kegelig umlaufende Spannfläche des Innen- oder des Außenringes erreichen, wobei es infolge des angewendeten »hydraulischen Prinzips« ausreichend sein kann, wenn die Spannfläche nur einen Teil der axialen Breite der den Spalt begrenzenden Fläche des Innen- bzw. Außenringes bildet, während der verbleibende Teil achsparallel ausgerichtet ist. Die von dem Dichtring nach erfolgter Volumenverminderung des Spaltes auf die angrenzenden Teile und damit auch auf die abgedichteten Flächen ausgeübten Kräfte sind in allen Bereichen spezifisch gleich groß, und es ist deshalb ohne jede funktionswesentliche Bedeutung, wenn die den Spalt begrenzende Fläche des Innen- und/oder des Außenringes durch mehrere, in axialer Richtung hintereinander angeordnete Spannfläche unterbrochen ist.

Die auf die abzudichtenden Maschinenelemente ausgeübten Anpresskräfte des Dichtringes ergeben sich aus der beim axialen Verpressen des Innen- und des Außenringes resultierenden Volumenverminderung des den Dichtring aufnehmenden Spaltes. Die Volumenverminderung wird maßgeblich bestimmt durch den Winkel, den die Spannflächen mit der Richtung der in den zugehörigen Innen- bzw. Außenring eingeleiteten Kräfte einschließlich sowie durch den Anteil der Spannfläche an der gesamten Berührungsfläche zwischen dem Innen- und dem Außenring mit dem Dichtring. Eine vergleichbare Abdichtwirkung läßt sich demzufolge durch vielfältige Variation der speziellen Auführung erreichen. Es ist jedoch im allgemeinen Maschinenbau anzustreben, daß die die Spannung des Dichtringes bewirkende theoretische Volumenverminderung des Spaltes den Bereich von 5 bis 30% nicht überschreitet. Bei einer geringeren Volumenverminderung ergibt sich häufig eine für eine gute Abdichtung unzureichende Anpressung des Dichtringes, während bei einer größeren Volumenverminderung verstärkt Spaltextrusionen von Bestandteilen des Dichtringes auftreten, die insbesondere bei einer die senkrechte Spannbewegung der abzudichtenden Maschinenelemente überlagernden Querbewegung zu einer Zerstörung des Dichtringes führen können. In beiderlei Hinsicht wird eine ausgezeichnete Sicherheit und damit eine gute Abdichtwirkung bei guter Wiederverwendbarkeit erreicht, wenn die theoretische Volumenverminderung 10 bis 20% beträgt. Der Winkel, den die Spannflächen mit der Bewegungsrichtung des jeweiligen Teiles einschließen, soll einen Bereich von 10' bis 45° nicht überschreiten.

In der als Anlage beigefügten Zeichnung ist bezug genommen auf einige beispielhafte Ausführungen der erfindungsgemäß vorgeschlagenen, selbstdichtenden Unterlegscheibe. Es zeigen

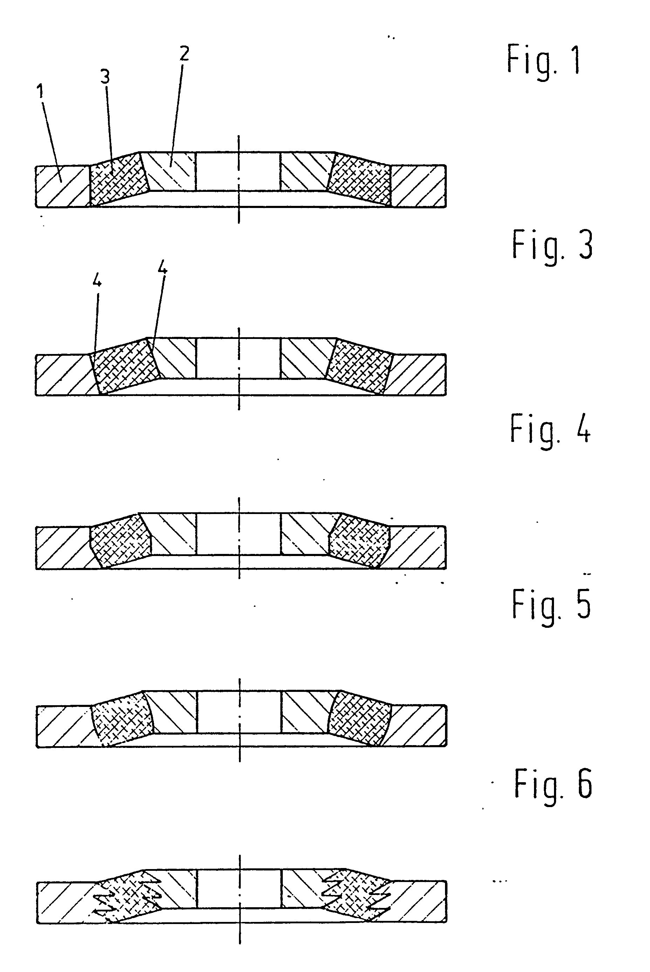

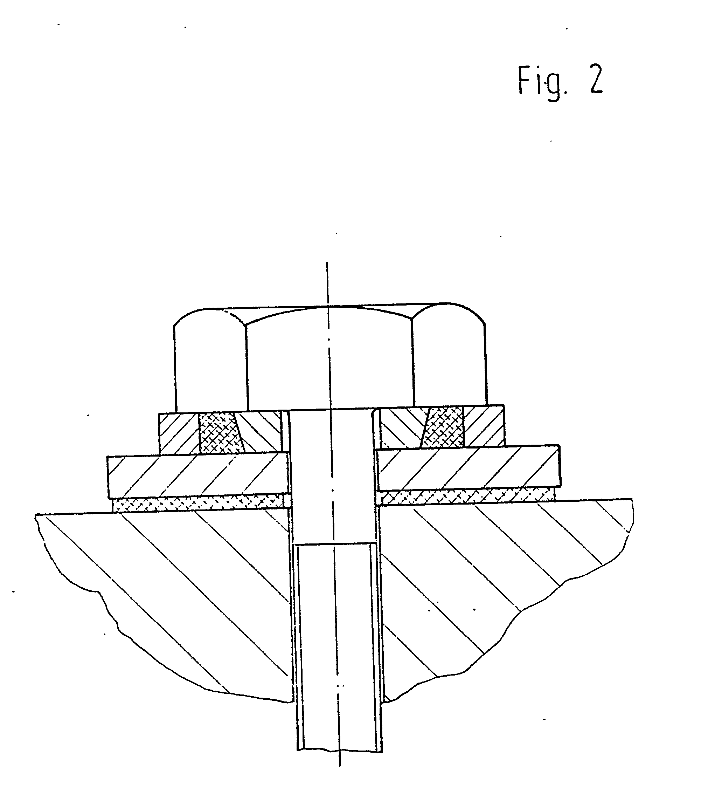

Fig. 1 eine Unterlegscheibe in längsgeschnittener Darstellung, wobei der den Dichtring 3 aufnehmende Spalt durch eine zylindrische Innenfläche des Außenringes 1 und durch eine kegelige Spannfläche des Innenringes 2 begrenzt wird.

Fig. 2 die Unterlegscheibe gemäß Fig. 1 mit gespanntem Dichtring nach dem Einbau.

Fig. 3 eine Unterlegscheibe ähnlich derjenigen aus Fig. 1 mit dem Unterschied, daß die den Spalt begrenzende Fläche des Außenringes ebenfalls als kegelige Spannfläche ausgebildet ist.

Fig. 4 eine Ausführung ähnlich derjenigen nach Fig. 3, bei der die Spannflächen nur einen Teil der axialen Erstreckung des Innen- und des Außenringes überdecken während der übrige Teil zylindrisch ausgebildet ist.

Fig. 5 eine Ausführung ähnlich derjenigen nach Fig. 3, mit der Abweichung, daß die Spannflächen in unterschiedlichen Bereichen unter unterschiedlichen Kegelwinkeln verlaufen, die gleichmäßig ineinander übergehen.

Fig. 6 eine Ausführung, bei der der Innenring und der Außenring jeweils mehrere in axialer Richtung hintereinander angeordnete Spannflächen aufweisen, die durch sich senkrecht zur Spannrichtung erstreckende Trennflächen verbunden sind.

Die erfindungsgemäße Unterlegscheibe läßt sich wie eine übliche Unterlegscheibe verwenden und kann deren Abmessungen haben. Sie bewirkt zusätzlich eine Abdichtung des Spaltes gegenüber den anschließenden Maschinenteilen gegen Flüssigkeiten und Gase und läßt sich wiederholt verwenden.

Die erzielte Abdichtwirkung beruht darauf, daß der Distanzring durch einen umlaufenden, ihn ganz durchtrennenden Spalt in einen Innenring 2 und einen Außenring 1 unterteilt ist, die einander konzentrisch zugeordnet sind und die unter Überbrückung des in ungespanntem Zustand eine größere Bauhöhe als der Distanzring aufweisenden Dichtringes axial gegeneinander versetzt sind. Der Dichtring besteht aus einem nachgiebigen Werkstoff, beispielsweise aus Gummi, Kunststoff oder Weichmetall, während der Außen- und der Innenring aus einem möglichst unnachgiebigen, harten Werkstoff bestehen, beispielsweise aus Stahl, um eine gute Abstützung des angeschlossenen Maschinenteils zu gewährleisten. Die Dimensionierung muß so vorgenommen werden, daß die durch die Deformierung des Dichtringes in den Innen- bzw. Außenring erzeugte Druckspannung bzw. Zugspannung die Elastizitätsgrenze des verwendeten Werkstoffes nicht überschreiten, so daß eine nachteilige plastische Deformierung vermieden wird.

Der Spalt zwischen dem Außen- und dem Innenring wird durch den Dichtring 3 ganz ausgefüllt, und der Spalt wird durch wenigstens eine kegelig umlaufende Spannfläche 4 des Innen- und/oder Außenringes zumindest teilweise verengt, die so geneigt ist, daß sich bei einer Verminderung des axialen Versatzes des Innen- und des Außenringes eine theoretische Verminderung des in den Zwischenraum eingeschlossenen Volumens ergibt. Hierdurch wird in dem Dichtring eine innere Kraft aufgebaut, durch die eine axiale Anpressung der beiderseitigen Stirnflächen gegen die anschließenden Maschinenteile und dadurch eine Abdichtung bewirkt wird, die aufgrund der entsprechenden elastischen radialen Stauchung des Innenringes elastisch ist. Der Anpressvorgang als solcher folgt dem hydraulischen Prinzip, wodurch in allen Teilbereichen der Stirnflächen gleiche Anpresskräfte erreicht werden. Unregelmäßigkeiten an der Oberfläche der anzudichtenden Maschinenteile werden dadurch in ausgezeichneter Weise überbrückt und es wird eine gute Dichtheit erreicht, die unabhängig ist von der Richtung der Druckbeaufschlagung und von Druckschwankungen oder Druckwechseln.

Die Höhe der Anpresskraft ist im wesentlichen abhängig von der theoritischen Volumenverminderung des Spaltes die sich ergibt, wenn der ursprünglich vorhandene axiale Versatz des Innen- und des Außenringes durch deren gegenseitige axiale Verpressung ausgeglichen ist sowie von den elastischen Eigenschaften des Innen- und Außenringes. Eine gute Abdichtwirkung und eine gute Wiederverwendbarkeit wird unter den Bedingungen des allgemeinen Maschinenbaues erreicht, wenn die Spannflächen so ausgelegt sind, daß sich eine theoretische Volumenverminderung um 5 bis 30%, vorzugsweise um 10 bis 20% ergibt.

**Patentansprüche**

1. Selbstdichtende Unterlegscheibe, bei welcher sich ein Dichtring (3) aus einem nachgiebigen, volumenkonstanten Werkstoff zwischen zwei konzentrisch angeordneten, einen umlaufenden Spalt bildenden, unnachgiebigen Distanzringen befindet, die somit einen Innenring (2) und einen Außenring (1) umfassen, und wobei der Dichtring (3) eine Bauhöhe hat, die im entspannten Zustand vor dem Einbau größer ist und im gespannten Zustand nach dem Einbau identisch ist mit der Dicke der Distanzringe, dadurch gekennzeichnet, daß die Distanzringe unter Überbrückung der Bauhöhe des ungespannten Dichtringes (3) axial gegeneinander versetzt sind, daß der Dichtring (3) den Spalt ausfüllt und daß wenigstens eine kegelig umlaufende Spannfläche (4) des Innenringes (2) und/oder des Außenringes (1) der Distanzringe den Spalt verengt und so geneigt ist, daß sich bei einer Verminderung des gegenseitigen, axialen Abstands der Distanzringe eine theoretische Verminderung des Volumens des Dichtringes ergibt.

2. Unterlegscheibe nach Anspruch 1, dadurch gekennzeichnet, daß der Dichtring (3) aus einem thermoplastischen Werkstoff besteht.

3. Unterlegscheibe nach Anspruch 1, dadurch gekennzeichnet, daß der Dichtring aus einem elastomeren Werkstoff besteht.

4. Unterlegscheibe nach Anspruch 2 oder 3, dadurch gekennzeichnet, daß der thermoplastische oder elastomere Werkstoff eine geschlossenzellige Porenstruktur aufweist.

5. Unterlegscheibe nach Anspruch 2 bis 4, dadurch gekennzeichnet, daß der Dichtring aus einem Weichmetall besteht.

6. Unterlegscheibe nach Anspruch 1 bis 5, dadurch gekennzeichnet, daß der Innenring (2) der Dichtring (3) und der Außenring (1) einstückig verbunden sind.

7. Unterlegscheibe nach Anspruch 1 bis 6, dadurch gekennzeichnet, daß die Spannfläche(n) (4) nach Neigung und axialer Erstreckung so auf das Gesamtvolumen des Spaltes bei gespanntem Dichtring abgestimmt sind, daß sich bei gespanntem Dichtring (3) eine theoretische Verminderung um 5 bis 30% ergibt.

8. Unterlegscheibe nach Anspruch 1 bis 6, dadurch gekennzeichnet, daß die Spannfläche (4) nach Neigung und axialer Erstreckung so auf das Gesamtvolumen des Spaltes bei entspanntem Dichtring (3) abgestimmt ist, daß sich bei gespanntem Dichtring eine theoretische Verminderung um 10 bis 20% ergibt.

9. Unterlegscheibe nach Anspruch 1 bis 8, dadurch gekennzeichnet, daß das Profil der Neigung der Spannfläche mit der Spannrichtung einen Winkel von 10 bis 50° einschließt.

10. Unterlegscheibe nach Anspruch 1 bis 8, dadurch gekennzeichnet, daß der Innenring (2) und der Außenring (1) sich parallel zueinander erstreckende Spannflächen aufweisen.

## Claims

1. Self-sealing washer, in which a sealing ring (3) made of a flexible material of constant volume is located between two concentrically arranged inflexible spacer rings which form an encircling gap and which thus comprise an inner ring (2) and an outer ring (1), the sealing ring (3) having a constructional height which in the relaxed state before installation is greater than and in the tensioned state after installation is identical to the thickness of the spacer rings, characterised in that the spacer rings are offset axially relative to one another, at the same time spanning the constructional height of the non-tensioned sealing ring (3), in that the sealing ring (3) fills the gap, and in that at least one conically encircling clamping surface (4) of the inner ring (2) and/or of the outer ring (1) of the spacer rings narrows the gap and is inclined in such a way that a reduction in the axial distance between the spacer rings results in a theoretical reduction in the volume of the sealing ring.

2. Washer according to Claim 1, characterised in that the sealing ring (3) consists of a thermoplastic material.

3. Washer according to Claim 1, characterised in that the sealing ring consists of an elastomeric material.

4. Washer according to Claim 2 or 3, characterised in that the thermoplastic or elastomeric material has a closed-cell pore structure.

5. Washer according to Claims 2 to 4, characterised in that the sealing ring consists of a soft metal.

6. Washer according to Claims 1 to 5, characterised in that the inner ring (2), the sealing ring (3) and the outer ring (1) are connected in one piece.

7. Washer according to Claims 1 to 6, characterised in that the clamping sufrace(s) (4) are co-ordinated in terms of inclination and axial extension with the total volume of the gap when the sealing ring is tensioned, in such a way that a theoretical reduction of 5 to 30% is obtained when the sealing ring (3) is tensioned.

8. Washer according to Claims 1 to 6, characterised in that the clamping surface (4) is co-ordinated in terms of inclination and axial extension with the total volume of the gap when the sealing ring (3) is relaxed, in such a way that a theoretical reduction of 10 to 20% is obtained when the sealing ring is tensioned.

9. Washer according to Claims 1 to 8, characterised in that the profilge of the inclination of the clamping surface forms with the clamping direction an angle of 10 to 50°.

10. Washer according to Claims 1 to 8, characterised in that the inner ring (2) and the outer ring (1) have clamping surfaces extending parallel to one another.

## Revendications

1. Rondelle auto-étanche dans laquell un anneau d'étanchéité (3), réalisé en matériau souple à volume constant, se trouve entre deux anneaux d'entretoise disposés concentriquement, non élastiques et constituant un intervalle circulaire, qui constituent ainsi un anneau intérieur (2) et un anneau extérieur (1), l'anneau d'étanchéité (3) ayant une hauteur telle, qu'à l'état non serré, avant le montage, elle soit supérieure et que, à l'état serré, après le montage, elle soit identique à l'épaisseur des anneaux d'entretoise, caractérisée en ce que les anneaux d'entretoise sont décalés axialement l'un par rapport à l'autre en couvrant la hauteur de l'anneau d'étanchéité (3) non serré, en ce que l'anneau d'étanchéité (3) remplit l'intervalle et en ce qu'au moins une surface de serrage (4) de forme conique de l'anneau intérieur (2) et/ou de l'anneau extérieur (1) des anneaux d'entretoise rétrécit l'intervalle et présente une inclinaison telle qu'en cas de diminution de la distance axiale entre les anneaux d'entretoise, il en résulte une diminution théorique du volume de l'anneau d'étanchéité.

2. Rondelle selon la revendication 1, caractérisée en ce que l'anneau d'étanchéité (3) est réalisé en matériau thermoplastique.

3. Rondelle selon la revendication 1, caractérisée en ce que l'anneau d'étanchéité est réalisé en un matériau élastomère.

4. Rondelle selon la revendication 2 ou 3, caractérisée en ce que le matériau thermoplastique ou élastomère présente une structure poreuse à cellules fermées.

5. Rondelle selon les revendications 2 à 4, caractérisée en ce que l'anneau d'étanchéité est réalisé en métal mou.

6. Rondelle selon les revendications 1 à 5, caractérisée en ce que l'anneau intérieur (2), l'anneau d'étanchéité (3) et l'anneau extérieur (1) sont assemblés en une pièce.

7. Rondelle selon les revendications 1 à 6, caractérisée en ce que la ou les surfaces de serrage (4) présentent une inclinaison et un profil axial choisis en fonction du volume global de l'intervalle quand l'anneau d'étanchéité est serré, de manière à obtenir une diminution théorique de 5 à 30% lorsque l'anneau d'étanchéité (3) est serré.

8. Rondelle selon les revendications 1 à 6, caractérisée en ce que les surfaces de serrage (4) présentent une inclinaison et un profil axial adaptés au volume global de l'intervalle quand l'anneau d'étanchéité (3) n'est pas serré, de manière à obtenir une diminution théorique de 10 à 20% lorsque l'anneau d'étanchéité est serré.

9. Rondelle selon les revendications 1 à 8, caractérisée en ce que le profil de la pente des surfaces d'étanchéité forme un angle de 10¨ à 50° avec le direction de serrage.

10. Rondelle selon les revendications 1 à 8, caractérisée en ce que l'anneau intérieur (2) et l'anneau extérieur (1) présentent des surfaces de serrage disposées parallèlement l'une à l'autre.

Fig. 1

Fig. 3

Fig. 4

Fig. 5

Fig. 6

Fig. 2